# FASCICULE DE BREVET EUROPEEN

(11) **EP 4 299 401 B1**
(45) Date de publication et mention de la délivrance du brevet: **30.07.2025**
(21) Numéro de dépôt: 23179638.4
(22) Date de dépôt: 15.06.2023
(51) Int. Cl.: B61B 1/02, B61B 12/00

(54) **GARE D'UNE INSTALLATION DE TRANSPORT PAR CÂBLE ET PROCÉDÉ DE MAINTENANCE D'UNE GARE**
BAHNHOF EINER SEILBAHNANLAGE UND VERFAHREN ZUR WARTUNG EINER BAHNSTATION
STATION OF A CABLE TRANSPORT SYSTEM AND METHOD FOR MAINTAINING A STATION

(30) Priorité: 27.06.2022 FR 2206398
(43) Date de publication de la demande: 03.01.2024
(60) Demande divisionnaire: 25184131.8
(73) Titulaire: POMA, 38340 Voreppe (FR)
(72) Inventeur: DARIER, Guillaume, 38340 Voreppe (FR); MANFREDI, Rémi, 38340 Voreppe (FR)
(74) Mandataire: Talbot, Alexandre

(56) Documents cités:
- EP-A1- 1 405 779
- CH-A2- 707 628
- FR-A1- 2 935 332
- US-A1- 2009 064 890
- US-A1- 2014 069 292

## Description

### Domaine technique

L'invention est relative à une gare d'une installation de transport par câble et à un procédé de maintenance d'une gare d'une installation de transport par câble.

### Technique antérieure

Pour déplacer des personnes ou des biens, il est connu d'utiliser des installations de transport par câble. Ces installations de transport par câble comportent une ou plusieurs gares ainsi que des pylônes. Un câble définit un chemin de circulation pour la circulation des véhicules entre les gares. Le câble est déplacé au moyen d'un moteur. Un ou plusieurs véhicules sont fixés au câble et ils se déplacent le long du chemin de circulation.

Comme toute installation de transport, l'installation de transport par câble est soumise régulièrement à des opérations de maintenance ce qui implique notamment que les différents éléments qui forment la gare soient accessibles à un ou plusieurs opérateurs afin d'analyser et éventuellement de réparer les éléments qui forment la gare.

Dans ce but, il est classique de former une gare qui est munie d'une plateforme interne qui chemine à côté du chemin de circulation des véhicules afin de pouvoir observer et éventuellement intervenir sur les équipements qui assurent le déplacement du câble et/ou des véhicules dans la gare. Afin d'assurer la sécurité du personnel, les éléments mobiles et notamment les roues d'entrainement et galets qui assurent l'entrainement du câble et/ou des véhicules sont protégés par un capotage. Le capotage empêche que l'opérateur qui circule sur la plateforme soit happé par un élément en mouvement. Une telle gare est connue par exemple du document EP1405779 A1.

Le capotage est monté mobile entre une première position qui assure la protection du personnel et une deuxième position qui autorise l'intervention sur les équipements mobiles et notamment sur les roues d'entrainement.

Cependant, lorsque l'opérateur doit intervenir sur les roues d'entrainement, on constate que la configuration n'est pas toujours très pratique car la plateforme de circulation est disposée assez loin des roues d'entrainement. Dans certaines configurations, il ressort également que les roues d'entrainement et la plateforme sont séparées par une poutre qui supporte les axes de rotation des roues d'entrainement. Il en résulte que durant les opérations de maintenance, les opérateurs ne peuvent pas toujours intervenir dans les conditions les plus adaptées.

Il est également important de limiter l'encombrement de la gare du système de transport par câble ce qui tend à faire des compromis entre l'encombrement de la gare et la facilité d'accès aux différents composants de la gare.

### Objet de l'invention

Un objet de l'invention consiste à prévoir une gare d'une installation de transport par câble qui facilite les interventions sur les équipements de déplacements du câble et/ou des véhicules sans augmenter l'encombrement de la gare.

Selon un aspect de l'invention, il est proposé une gare d'une installation de transport par câble selon la revendication 1.

De manière avantageuse, la première position, la plateforme additionnelle est disposée, au moins en partie, du premier côté par rapport au chemin de circulation.

Dans une configuration particulière, la première position, la plateforme additionnelle est disposée majoritairement du premier côté par rapport au chemin de circulation.

Dans un développement avantageux, dans la deuxième position, la plateforme additionnelle est disposée dans un espace destiné à être occupé par la pince, la plateforme additionnelle formant un obstacle au passage du au moins un véhicule dans la gare.

Préférentiellement, la gare comporte, en outre, une paroi de toit. La paroi de toit définit une plateforme supplémentaire destinée à supporter l'opérateur, la plateforme supplémentaire étant décalée de la plateforme additionnelle selon une première direction perpendiculaire au chemin de circulation dudit au moins un véhicule, la plateforme supplémentaire étant disposée à une hauteur inférieure à la hauteur de la plateforme additionnelle et décalée pour disposer la plateforme additionnelle entre la pluralité de roues et la plateforme supplémentaire pour que la plateforme additionnelle forme un plan de travail, l'altitude de la plateforme supplémentaire étant inférieure à l'altitude de la plateforme additionnelle.

Selon un mode de réalisation, le dispositif de déplacement comporte au moins une roue configurée pour déplacer le véhicule dans la gare. L'altitude de la plateforme additionnelle est inférieure à l'altitude d'un axe de rotation de la au moins une roue.

Dans un développement avantageux, la plateforme additionnelle est formée par une première plaque et une deuxième plaque, la deuxième plaque étant montée mobile par rapport à la première plaque, la deuxième plaque étant montée mobile entre une position de protection et une protection rabattue, dans laquelle dans la position de protection la deuxième plaque s'étend à partir de la première plaque vers le haut et dans laquelle dans la position rabattue la deuxième plaque est plaquée contre la première plaque.

Préférentiellement, dans la première position, la plateforme additionnelle forme le capotage.

Dans un autre développement avantageux, la plateforme additionnelle est montée en rotation entre la première position et la deuxième position.

L'invention a également pour objet un procédé de maintenance qui est plus facile à réaliser que dans les configurations de l'art antérieur.

On tend à atteindre ce résultat au moyen d'un procédé de maintenance d'une gare d'une installation de transport par câble comportant les étapes suivantes :
- fournir une gare selon l'une quelconque des configurations précédentes ;
- déplacer la plateforme additionnelle de la première position à la deuxième position, la deuxième position supportant un opérateur qui intervient sur le dispositif de déplacement, la première position est une position où la plateforme additionnelle est hors de l'espace de passage des véhicules dans la gare.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre schématiquement une vue de côté d'une gare avec une plateforme additionnelle dans une première position ;
- la figure 2 illustre schématiquement une vue en perspective de la gare avec la plateforme additionnelle dans la première position ;
- la figure 3 illustre schématiquement une vue de dessus de la gare avec la plateforme additionnelle dans la première position ;
- la figure 4, illustre schématiquement une vue de côté de la gare avec la plateforme additionnelle dans une position intermédiaire ;
- la figure 5, illustre schématiquement une vue en perspective de la gare avec la plateforme additionnelle dans la position intermédiaire ;
- la figure 6, illustre schématiquement une vue de dessus de la gare avec la plateforme additionnelle dans la position intermédiaire ;
- la figure 7, illustre schématiquement une vue de côté de la gare avec la plateforme additionnelle dans une deuxième position avec un garde-corps ;
- la figure 8 illustre schématiquement une vue en perspective de la gare avec la plateforme additionnelle dans la deuxième position avec un garde-corps ;
- la figure 9 illustre schématiquement une vue de dessus de la gare avec la plateforme additionnelle dans la deuxième position avec un garde-corps ;
- la figure 10, illustre schématiquement une vue de côté de la gare avec la plateforme additionnelle dans la deuxième position et formant un plan de travail ;
- la figure 11 illustre schématiquement une vue en perspective de la gare avec la plateforme additionnelle dans la deuxième position et formant le plan de travail ;
- la figure 12 illustre schématiquement une vue de dessus de la gare avec la plateforme additionnelle dans la deuxième position et formant le plan de travail.

### Description des modes de réalisation

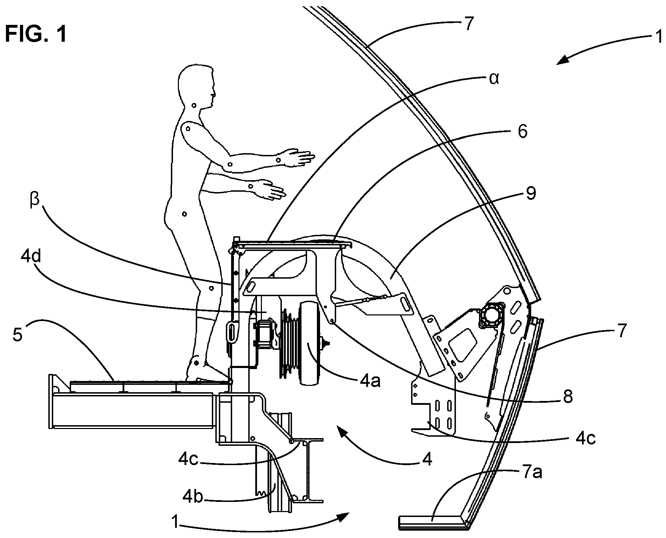

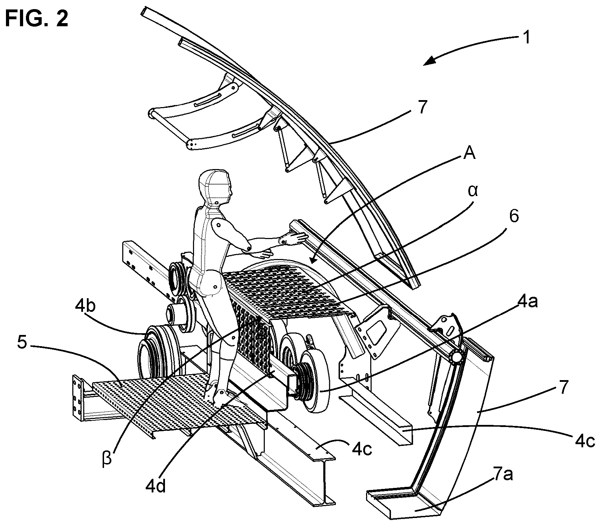

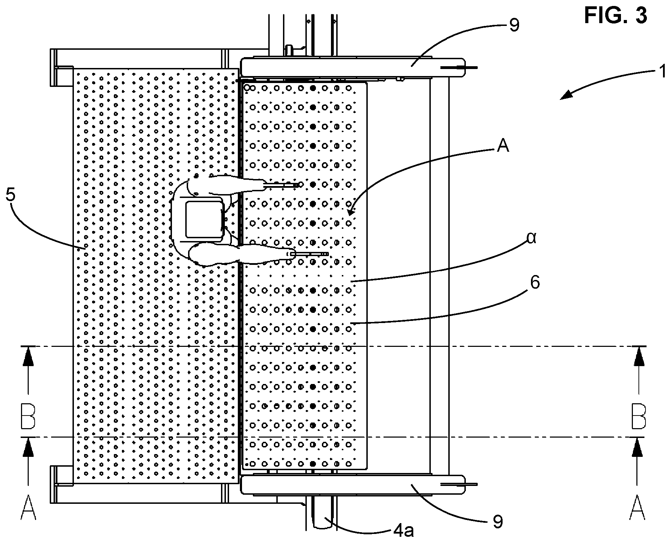

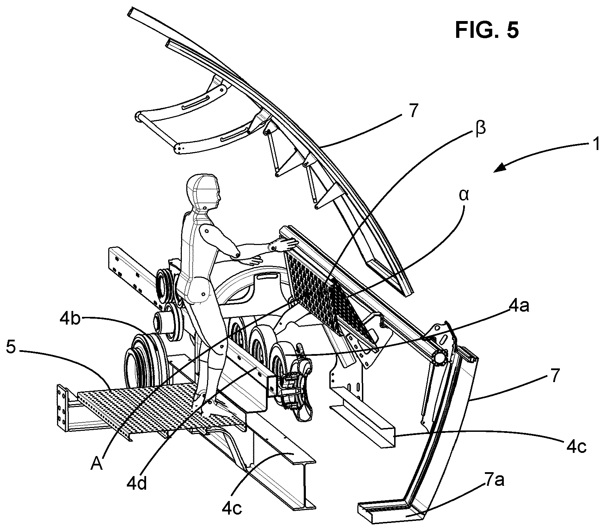

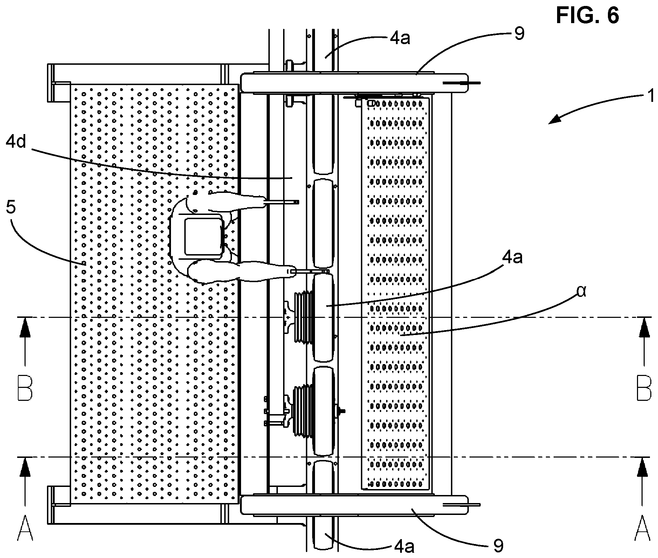

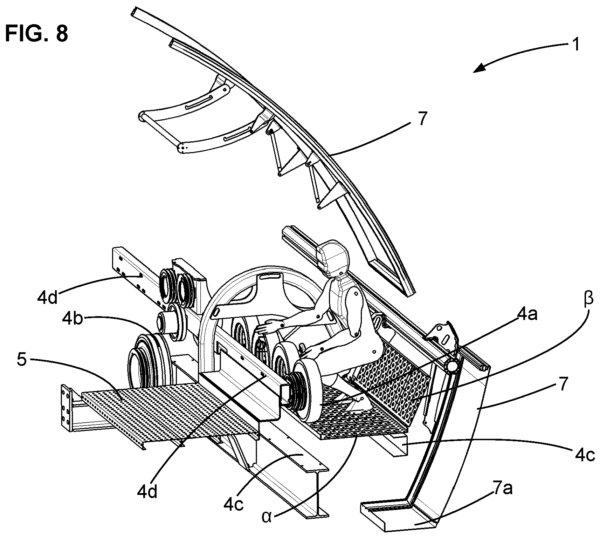

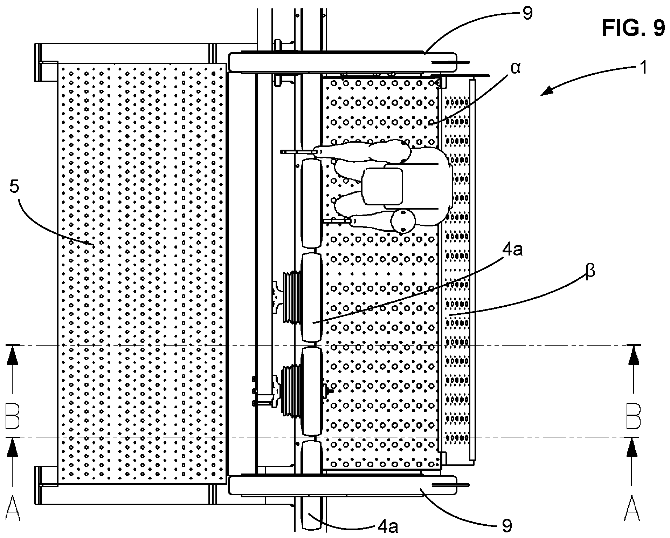

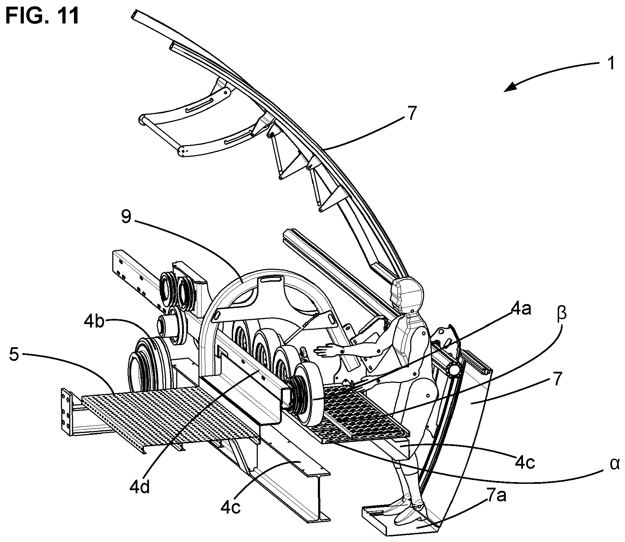

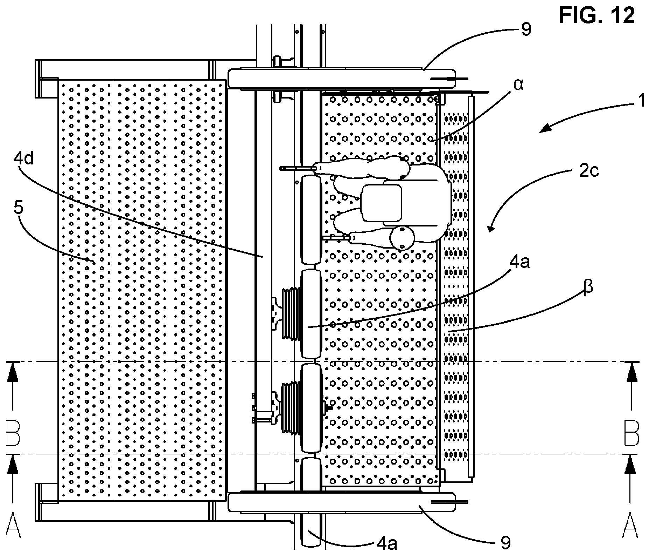

Les figures 1 à 12 illustrent différentes vues d'une gare 1 d'une installation de transport par câble dans différentes configurations. L'installation de transport par câble comporte une ou plusieurs gares 1, par exemple deux gares terminales avec éventuellement des gares intermédiaires. L'installation de transport par câble possède un ou plusieurs véhicules. L'installation de transport par câble définit un chemin de circulation pour le ou les véhicules. Le chemin de circulation est défini totalement ou en partie par un câble 2 ou par plusieurs câbles 2. De manière préférentielle, lorsque l'installation de transport par câble possède plusieurs gares 1, le ou les câbles 2 relient les gares 1 entre elles.

L'installation de transport par câble comporte un moyen d'entrainement du câble qui est configuré pour entrainer le câble 2. Le moyen d'entrainement du câble possède par exemple au moins un moteur. Le moyen d'entrainement du câble peut être disposé dans la gare 1 ou ailleurs.

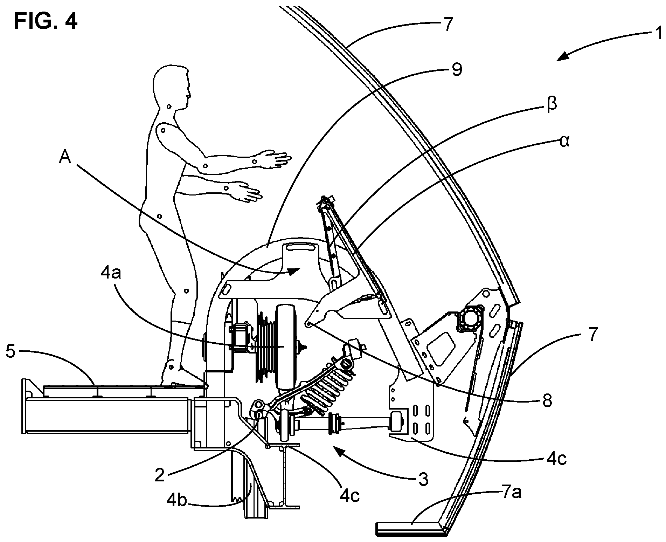

Le ou les véhicules sont fixés au câble 2 par une pince 3 ou au moins une pince 3. Selon les configurations, les véhicules sont montés fixement au câble 2 ou sont montés de manière débrayable par rapport au câble 2. La pince 3 est adaptée en conséquence. La figure 4 illustre une configuration de pince 3 débrayable qui permet de désaccoupler le câble 2 et le véhicule.

La gare 1 possède un dispositif de déplacement 4 configuré pour permettre le déplacement du au moins un véhicule dans la gare 1, par exemple le déplacement du véhicule à travers la gare 1. Le dispositif de déplacement 4 définit en partie le chemin de circulation du véhicule et notamment le chemin de circulation dans la gare 1 et préférentiellement à travers la gare 1.

De manière à faciliter le déplacement d'un opérateur dans la gare 1, cette dernière possède une plateforme 5. La plateforme 5 définit un chemin autorisant le déplacement de l'opérateur entre les différentes parties de la gare 1. La plateforme 5 est disposée d'un premier côté du dispositif de déplacement 4. Lorsque le chemin de circulation définit un « U », la plateforme est préférentiellement disposée du côté interne du chemin de circulation, c'est-à-dire à l'intérieur du « U ». La plateforme 5 est disposée en vis-à-vis du dispositif de déplacement 4, c'est-à-dire à la même altitude que le dispositif de déplacement 4 ou sensiblement à la même altitude pour que l'opérateur puisse accéder aux composants du dispositif de déplacement 4 en position debout ou préférentiellement à genou. La plateforme 5 est préférentiellement disposée pour être plus loin des composants de la pince 3 du véhicule que du câble 2 de manière à réduire l'encombrement de la gare 1.

La plateforme 5 est disposée en hauteur de manière à ne pas former un obstacle à la bonne circulation des véhicules dans la gare 1. De manière générale, la plateforme 5 ne forme pas un obstacle aux éléments qui servent à la mise en mouvement du câble 2 ainsi qu'aux éléments de déviation des véhicules le cas échéant. La disposition de la plateforme 5 et des autres composants de la gare est effectuée de manière astucieuse afin de trouver le meilleur compromis entre l'encombrement de la gare 1 et la facilité des interventions de maintenance. De manière préférentielle, la plateforme 5 est disposée au-dessus de la cabine ou du siège lorsque l'installation de transport par câble est une télécabine ou un télésiège. La plateforme est disposée de manière à autoriser le fonctionnement de l'installation de transport.

Afin de protéger l'opérateur durant le fonctionnement de l'installation de transport par câble, les éléments constitutifs du dispositif de déplacement 4 ne sont pas facilement accessibles ou ne sont pas accessibles par l'opérateur qui circule sur la plateforme 5. Il en est avantageusement de même pour le câble 2 et/ou la partie du véhicule qui se trouve à proximité de la plateforme, par exemple la pince 3.

La figure 1 illustre un mode de réalisation dans lequel le dispositif de déplacement 4 est rendu inaccessible, depuis la plateforme 5, au moyen d'au moins un capotage. Le capotage recouvre partiellement le dispositif de déplacement 4, de sorte que le au moins capotage se trouve entre l'opérateur situé sur la plateforme 5 et le dispositif de déplacement 4. Dans le mode de réalisation illustré, le capotage est en forme de cornière qui empêche un accès selon une direction horizontale ainsi que selon une direction verticale aux composants du dispositif de déplacement. Une autre forme de capotage est possible.

Afin de pouvoir réaliser les opérations de maintenance, le au moins un capotage présente une première position qui est une position de protection empêchant l'accès à tout ou partie du dispositif de déplacement 4 et une deuxième position qui est une position d'intervention autorisant l'accès. Selon les configurations, le ou les capotages sont montés mobiles ou déformables entre la position de protection et la position d'intervention.

Le passage de la position de protection à la position d'intervention peut se faire par déformation du capotage, par escamotage du capotage, par déplacement du capotage, par exemple par rotation du capotage, et éventuellement par démontage du capotage. De manière préférentielle, le passage de la première position à la deuxième position entraine l'arrêt de l'installation de transport par câble et/ou n'est possible que lorsque l'installation est arrêtée. Le capotage peut être muni d'un capteur qui détecte que le capotage n'est plus dans la première position et/ou peut être muni d'un verrou qui empêche le déplacement du capotage hors de la première position lorsque l'installation n'est pas à l'arrêt, c'est-à-dire est en fonctionnement.

Dans un mode de réalisation particulier illustré aux figures 1 à 12, le dispositif de déplacement 4 est un dispositif de déplacement d'une installation de transport par câble pour des véhicules à pince 3 débrayable. Le dispositif de déplacement est alors configuré pour déplacer séparément le câble 2 et le au moins un véhicule sur une partie du chemin de circulation. Le dispositif de déplacement 4 possède une pluralité d'éléments mobiles, de préférence des éléments rotatifs qui sont destinés à déplacer le câble 2 et/ou les véhicules dans la gare 1. Les éléments rotatifs sont préférentiellement des roues 4a et/ou des galets 4b qui interviennent dans le déplacement du câble 2 ou des véhicules. Dans un mode de réalisation un ou plusieurs des éléments rotatifs sont montés fous. Dans un autre mode de réalisation, un ou plusieurs des éléments rotatifs sont entrainés en rotation. Il est également possible d'avoir des galets 4b montés fous et des roues 4a qui entrainent les véhicules.

Comme illustré sur les figures 1 à 12, la gare possède préférentiellement une série de roues 4a qui réalisent l'entrainement du au moins véhicule le long du chemin de circulation. Les roues 4a sont disposées les unes à la suite des autres pour définir une partie du chemin de circulation.

Comme illustré à la figure 4 et sur les autres figures, la gare 1 possède un ou plusieurs galets 4b qui supportent ou appuient sur le câble 2. Les galets 4b participent au déplacement du câble 2 à l'intérieur de la gare 1.

Les éléments mobiles sont montés les uns à la suite des autres pour définir le chemin de circulation. Par exemple, les éléments mobiles sont alignés les uns à la suite des autres pour définir une portion en ligne droite. Dans un autre mode de réalisation, les éléments mobiles sont disposés les uns derrières les autres pour définir une courbe ou une autre forme.

Pour faciliter le cheminement du au moins un véhicule dans la gare 1, il est avantageux d'avoir un ou plusieurs rails 4c, par exemple deux rails 4c qui supportent le véhicule. Dans la gare 1, le véhicule roule sur le au moins un rail 4c qui définit le chemin de circulation pour le véhicule. Les rails 4c supportent au moins une paire de roues du véhicule. Deux rails 4c en vis-à-vis sont séparés par un espace de passage pour le bras du véhicule. Il est avantageux que les pneus 4a soient monté sur une poutre 4d.

La plateforme 5 est décalée latéralement par rapport au dispositif de déplacement 4 et elle se situe hors de l'espace de passage des véhicules dans la gare 1. La disposition décalée de la plateforme 5 dans la gare 1 fait que le dispositif de déplacement 4 n'est pas facilement accessible pour l'opérateur et que certains composants du dispositif de déplacement 4 deviennent difficilement manipulables notamment les roues 4a. Il en résulte que lors d'une opération de maintenance, l'opérateur peut se trouver dans une position inconfortable. L'espace de passage des véhicules représente l'espace minimal occupé par le véhicule qui circule dans la gare 1 le long du chemin de circulation. L'espace de passage correspond sensiblement à l'encombrement latéral du véhicule et il définit le volume dans lequel un élément ne peut être installé car il va former un obstacle au passage du véhicule. A l'altitude du dispositif de déplacement, l'espace de passage est majoritairement ou exclusivement défini par la pince 3 et le bras qui supporte la cabine ou le siège du véhicule.

Afin de faciliter le travail de l'opérateur, il est avantageux de prévoir une gare 1 qui soit munie d'une plateforme additionnelle A. La plateforme additionnelle A est déplaçable entre une première position et une deuxième position différente de la première position. La première position est une position où la plateforme additionnelle ne forme pas obstacle à la progression du au moins un véhicule dans le chemin de circulation. La deuxième position de la plateforme additionnelle A est une position apte à supporter l'opérateur pour permettre une intervention sur le dispositif de déplacement 4. Dans la deuxième position, la plateforme additionnelle A est disposée d'un second côté du chemin de circulation en vis-à-vis de la plateforme 5, le second côté étant opposé au premier côté par rapport au chemin de circulation selon une observation verticale.

La plateforme additionnelle A est une plateforme qui se trouve de l'autre côté du dispositif de déplacement 4 de manière à pouvoir faciliter les opérations de maintenance. L'opérateur peut se déplacer de la plateforme 5 à la plateforme additionnelle A en toute sécurité, c'est-à-dire depuis le premier côté jusqu'au deuxième côté afin de pouvoir intervenir de manière plus efficace sur le dispositif de déplacement 4 avec un autre point de vue. La plateforme 5 permet une intervention depuis un côté du dispositif de déplacement alors que la plateforme additionnelle A permet une intervention depuis l'autre côté du dispositif de déplacement. La plateforme additionnelle A est préférentiellement réalisée en matériau métallique.

On entend par « la plateforme additionnelle A est disposée du second côté du chemin de circulation » que la plateforme additionnelle A est majoritairement située du second côté voire exclusivement du second côté.

De manière préférentielle, dans la première position, la plateforme additionnelle A est disposée du premier côté du chemin de circulation, c'est-à-dire majoritairement située du premier côté voire exclusivement du premier côté. En étant située du premier côté, la plateforme additionnelle A est plus facilement accessible à l'opérateur et elle réduit l'encombrement du deuxième côté lorsque les véhicules circulent. Cela peut permettre d'avoir une paroi externe de gare 1 qui est plus proche de l'espace de passage des véhicules.

Dans la deuxième position, la plateforme additionnelle A est horizontale ou sensiblement horizontale pour rendre plus sûr le travail de l'opérateur. De manière préférentielle, la plateforme additionnelle A possède une surface qui est supérieure à 1m².

Dans un mode de réalisation particulier, dans la deuxième position, la plateforme additionnelle A est disposée dans l'espace de passage des véhicules et elle obstrue l'espace de passage. Cette disposition facilite l'intervention sur le dispositif de déplacement 4. Dans la deuxième position, la plateforme additionnelle A empêche le passage du au moins un véhicule à travers la gare 1. Avantageusement, dans la deuxième position, la plateforme additionnelle A occupe l'espace destiné à être occupé par la pince 3 d'un véhicule. En d'autres termes, si le véhicule circule, la pince 3 va percuter la plateforme additionnelle A. De manière préférentielle, la gare 1 possède un capteur configuré pour détecter la présence de la plateforme additionnelle A dans la deuxième position et interdire le démarrage de l'installation de transport par câble lorsque la détection intervient.

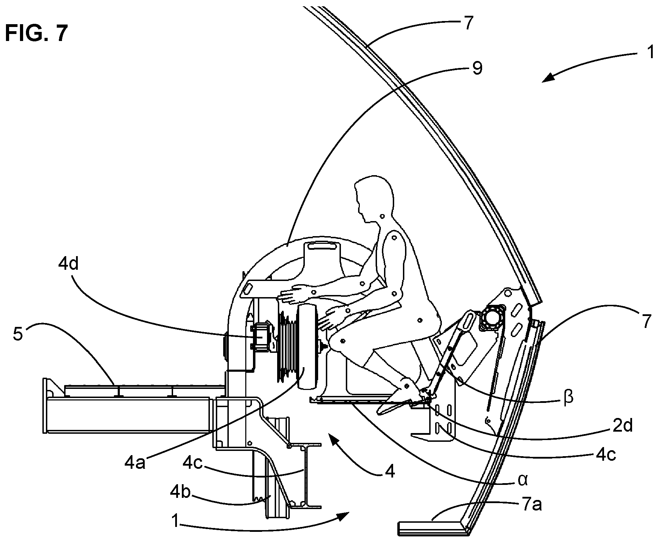

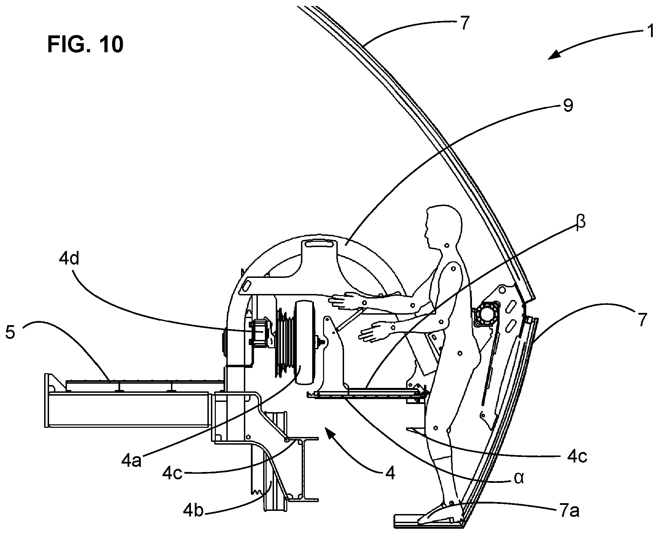

Dans un mode de réalisation avantageux, lorsque le dispositif de déplacement 4 est munie de roues 4a qui déplacent le véhicule, il est avantageux que la plateforme additionnelle A soit disposée à une altitude qui est inférieure à l'altitude de l'axe de rotation de la roue 4a qui lui fait face. De manière encore plus avantageuse, la plateforme additionnelle A est à une altitude qui est inférieure à l'altitude de la roue 4a qui lui fait face. De manière préférentielle, la différence entre l'altitude plateforme 5 et l'altitude de la zone la plus basse de la roue 4a est inférieure à 50cm de manière à faciliter le démontage de la roue 4a. Un tel mode de réalisation est illustré aux figures 7 et 10. En décalant vers le bas la plateforme additionnelle A, on facilite l'intervention de l'opérateur. On entend par « qui lui fait face », la roue 4a qui est en vis-à-vis de la plateforme additionnelle selon un plan vertical qui passe par l'axe de rotation de la roue 4a. Dans la deuxième position, la plateforme additionnelle peut être à une altitude qui est égale ou inférieure à l'altitude de la plateforme 5 dans la zone en vis-à-vis perpendiculairement au chemin de circulation comme cela est illustré aux figures 7 et 10. Préférentiellement, durant le déplacement entre la première position et la deuxième position, la plateforme additionnelle n'atteint jamais l'altitude de la cabine ou du siège.

Dans un mode de réalisation avantageux illustré aux figures 1 à 12, la gare 1 comporte également une paroi de toit 7. La paroi de toit 7 forme un toit sur le dessus de la gare 1. La paroi de toit 7 définit une plateforme supplémentaire 7a destinée à supporter l'opérateur. La plateforme supplémentaire 7a est décalée de la plateforme additionnelle A selon une première direction perpendiculaire à la direction de circulation du au moins un véhicule. La plateforme supplémentaire 7a est disposée à une hauteur inférieure à la hauteur de la plateforme additionnelle A et décalée pour disposer la plateforme additionnelle A entre la pluralité de roues et la plateforme supplémentaire 7a, dans une observation verticale, pour que la plateforme additionnelle A forme un plan de travail.

La paroi de toit 7 est destinée à former le toit de la gare 1 afin de protéger les composants de la gare 1 contre les intempéries, notamment la pluie et la neige. La paroi de toit 7 forme un décroché qui est suffisamment large et suffisamment résistant afin de définir la plateforme supplémentaire 7a qui est apte à supporter le poids de l'opérateur. Lorsque la paroi de toit 7a est formée par une tôle métallique, il est possible de renforcer la plateforme supplémentaire 7a pour que la tôle supporte le poids de l'utilisateur. La plateforme supplémentaire 7a est horizontale ou sensiblement horizontale.

Lorsque l'opérateur est monté sur la plateforme supplémentaire 7a, l'opérateur est séparé du dispositif de déplacement 4 par la plateforme additionnelle A et la plateforme supplémentaire 7a est disposée à une altitude telle que la plateforme additionnelle A forme un plan de travail. L'opérateur peut alors démonter un composant du dispositif de déplacement 4 et le poser sur la plateforme additionnelle pour travailler sur le composant démonté. La différence d'altitude entre la plateforme additionnelle et la plateforme supplémentaire 7a est avantageusement comprise entre 0,75 et 1,5m. Il est intéressant de modifier la paroi de toit 7 pour être apte à supporter le poids d'un opérateur et pour utiliser la plateforme additionnelle A en tant que plan de travail. Cela permet d'apporter une fonctionnalité supplémentaire sans augmenter l'encombrement de la gare 1.

Dans un mode de réalisation particulier illustré aux figures 1 à 12, la plateforme additionnelle A est formée par une première plaque α et une deuxième plaque β. La deuxième plaque βest montée mobile par rapport à la première plaque α, par exemple au moyen d'une charnière. Au moins la première plaque α est destinée à supporter l'opérateur. Préférentiellement, la deuxième plaque β est montée mobile entre une position de protection et une position rabattue. Dans la position de protection, la deuxième plaque β s'étend à partir de la première plaque αvers le haut. Dans la position rabattue, la deuxième plaque β est plaquée contre la première plaque α, contre la face supérieure ou contre la face inférieure. La première plaque α est parallèle ou sensiblement parallèle à la deuxième plaque β.

Dans un premier cas de figure, la deuxième plaque β est montée mobile entre une première position de garde-corps et la position rabattue. Dans la première position de garde-corps, la deuxième plaque β s'étend à partir de la première plaque α vers le haut. La deuxième plaque β s'étend verticalement ou en d'éloignant du dispositif de déplacement 4 et vers le haut. En formant un garde-corps, la deuxième plaque β fait obstacle à un déplacement de l'opérateur au-delà d'une position seuil en s'éloignant du dispositif de déplacement 4 ce qui améliore la sécurité lorsque l'opérateur recule et qu'il existe un espace vide entre la plateforme additionnelle A et la paroi de toit 7 ou que la gare 1 est dépourvue de paroi de toit 7. Les figures 7, 8 et 9 représentent la première plaque α dans la position qui supporte l'opérateur et la deuxième plaque β qui forme un garde-corps.

Dans un second cas de figure, la première plaque α est destinée à supporter l'opérateur et la deuxième plaque β se déplace entre une deuxième position de garde-corps et la position rabattue. Dans la deuxième position de garde-corps, la deuxième plaque β s'étend à partir de la première plaque α vers le bas. La deuxième plaque β s'étend verticalement en direction de la plateforme supplémentaire 7a. En formant un garde-corps, la deuxième plaque fait obstacle à un déplacement de l'opérateur au-delà d'une position seuil ce qui améliore la sécurité lorsque l'opérateur est monté sur la plateforme supplémentaire 7a.

La plateforme additionnelle A peut être configurée pour que la deuxième plaque β présente uniquement une des positions parmi la première position de garde-corps et la deuxième position de garde-corps. Il est également possible que la plateforme additionnelle A soit configurée pour que la deuxième plaque β présente uniquement deux positions parmi la première position de garde-corps, la deuxième position de garde-corps et la position rabattue.

Dans un mode de réalisation avantageux, la plateforme additionnelle A vient en appui contre un rail 4c lorsque la plateforme additionnelle A est dans la deuxième position. Préférentiellement, la première plaque α vient en appui contre un rail 4c lorsque la plateforme additionnelle est dans la deuxième position. L'utilisation du rail 4c permet de limiter les éléments disposés dans la gare 1 et de placer la plateforme additionnelle A à la bonne altitude vis-à-vis du dispositif de déplacement 4 en se positionnant vis-à-vis du rail 4c destiné à recevoir au moins une roue du véhicule. La reprise d'effort par le rail 4c permet de faciliter la formation d'une plateforme additionnelle compacte. Le cas échéant, uniquement la première plaque vient en appui sur le rail 4c. Il est particulièrement avantageux d'utiliser le rail 4c comme butée de fin de course pour la plateforme additionnelle A.

De manière avantageuse, la plateforme additionnelle A est montée rotative entre la première position et la deuxième position. Un tel mode de réalisation est facile à mettre en œuvre. La gare 1 possède un arbre de rotation 8 qui est préférentiellement monté fixe par rapport au dispositif de déplacement 4. Il est avantageux que l'arbre de rotation 8 soit disposé au-dessus de l'espace de passage des véhicules. La figure 4 illustre un arbre de rotation 8 disposé au-dessus à la verticale de la pince 3.

Dans un mode de réalisation préférentiel, une plaque est montée sur l'ossature dans le prolongement de la plateforme additionnelle de manière à prolonger la plateforme additionnelle. La plaque est disposée entre la plateforme additionnelle et la toiture dans un même plan horizontal. La plaque n'est pas assez large pour supporter un opérateur, par exemple inférieure à 50cm. Avantageusement, la plaque est montée mobile entre une position horizontale et une position verticale. Dans la position horizontale, la plaque est dans le prolongement de la plateforme additionnelle apte à supporter l'opérateur de sorte que la plaque et la plateforme additionnelle définissent un même plan de support de l'opérateur. Dans la position verticale, la plaque vient en saillie vers le bas à l'extrémité de la plateforme additionnelle de manière à réduire l'espacement entre la plateforme additionnelle et la structure qui supporte l'opérateur et ainsi améliorer la protection contre les chutes. La plateforme additionnelle forme un plan de travail et la plaque définit un garde-corps.

Dans une configuration préférentielle, les deux extrémités de la plateforme additionnelle sont terminées par un garde-corps 9 qui s'étend selon une direction verticale et qui est monté fixe par rapport au dispositif de déplacement 4. De manière encore plus préférentielle, lorsque la plateforme additionnelle A est montée à rotation, l'arbre de rotation 8 est monté fixe par rapport aux garde-corps 9. Les deux garde-corps 9 forment deux obstacles aux deux extrémités de la plateforme additionnelles pour éviter une chute de l'opérateur. De préférence, les deux garde-corps 9 sont montés immobiles par rapport au dispositif de déplacement 4. Il est avantageux d'utiliser les supports de la paroi de toit 7 en tant que garde-corps 9.

De manière particulièrement intéressante illustrée aux figures 1 à 12, le capotage forme la plateforme additionnelle A. Les figures 1 à 3 illustrent le capotage destiné à former la plateforme additionnelle A dans la première position. Dans cette première position, le capotage est dans la position qui empêche l'accès au dispositif de déplacement 4. Cette position de protection correspond également à la position de la plateforme additionnelle qui ne permet pas à l'opérateur d'intervenir sur le dispositif de déplacement. Le capotage ne permet pas un accès au dispositif de déplacement 4 depuis le second côté. Le capotage fait obstacle au passage de l'opérateur vers le second côté.

Les figures 4 à 6 illustrent la plateforme additionnelle A dans une position intermédiaire, c'est-à-dire entre la première position et la deuxième position.

Les figures 7 à 12 illustrent la plateforme additionnelle A dans la deuxième position, c'est-à-dire dans la position apte à supporter un opérateur pour que ce dernier soit en mesure d'intervenir sur le dispositif de déplacement 4. Les figures 7 à 9 illustrent l'opérateur installé sur la plateforme additionnelle A. Les figures 10 à 12 illustrent l'opérateur installé sur la plateforme supplémentaire 7a face à la plateforme additionnelle A et face au dispositif de déplacement 4, la plateforme additionnelle A étant disposée entre l'opérateur et le dispositif de déplacement 4.

Dans un mode de réalisation, le dispositif de déplacement 4 comporte une pluralité de roues 4a, le plan séparant le premier côté et le second côté est défini par une surface verticale perpendiculaire aux roues 4a respectives qui définissent le chemin de circulation des véhicules. Le plan traverse les roues 4a.

Dans un autre mode de réalisation, le dispositif de déplacement 4 comporte une pluralité de galets 4b, le plan séparant le premier côté et le second côté est défini par une surface verticale perpendiculaire aux galets 4b respectifs qui définissent le chemin de circulation des véhicules au moyen du cheminement du câble 2. Le plan traverse les galets 4b.

Les figures 1 à 12 illustrent un mode de réalisation dans lequel le capotage forme l'intégralité de la plateforme additionnelle A ce qui permet de limiter l'encombrement à l'intérieur de la gare 1. Cependant, il est également possible de dissocier la plateforme additionnelle A et le capotage, par exemple en prévoyant que la plateforme additionnelle A soit disposée sur ou au-dessus du capotage en position de protection. Il est également possible de prévoir que, dans sa première position, la plateforme additionnelle soit uniquement accessible lorsque le capotage est dans la position d'intervention.

Dans une configuration, la plateforme additionnelle A forme tout ou partie du capotage. Dans une autre configuration le capotage forme tout ou partie de la plateforme additionnelle A.

Il est encore possible d'avoir une plateforme additionnelle A qui présente une première position qui correspond à une position de rangement en direction ou contre la paroi de toit 7. En d'autres termes, dans la première position, la plateforme additionnelle A et la plateforme 5 sont séparées par le dispositif de déplacement 4. Cette configuration est moins avantageuse que la précédente car elle complique la manipulation par l'opérateur pour passer de la première position à la deuxième position pour la plateforme additionnelle A et/ou elle peut représenter un encombrement plus important.

## Revendications

1. Gare (1) d'une installation de transport par câble munie d'au moins un véhicule, la gare (1) comportant :
- un dispositif de déplacement (4) configuré pour déplacer le au moins un véhicule dans la gare (1), le dispositif de déplacement (4) définissant un chemin de circulation du au moins un véhicule dans la gare (1), le dispositif de déplacement (4) comportant une pluralité d'éléments mobiles (4a, 4b) aptes à déplacer le au moins un véhicule dans la gare (1) ;
- une plateforme (5) disposée d'un premier côté du chemin de circulation, la plateforme (5) étant configurée pour autoriser la circulation d'un opérateur à côté du dispositif de déplacement (4) et permettre une intervention sur le dispositif de déplacement (4) ;
- au moins un capotage (6) monté mobile entre une première position et une deuxième position, dans la première position le au moins un capotage (6) recouvrant au moins partiellement le dispositif de déplacement (4) pour séparer l'opérateur présent sur la plateforme (5) et le dispositif de déplacement (4) et empêcher l'accès au dispositif de déplacement (4) depuis la plateforme (5), dans la deuxième position le au moins un capotage (6) autorisant l'accès au dispositif de déplacement (4) depuis la plateforme (5) ;
la gare (1) définissant un espace de passage destiné à laisser circuler une pince (3) du au moins un véhicule, la pince (3) fixant le au moins un véhicule au câble (2), le dispositif de déplacement (4) étant disposé entre la plateforme (5) et l'espace de passage ;
**gare caractérisée en ce que,** dans la deuxième position, le au moins un capotage (6) forme une plateforme additionnelle (A) apte à supporter l'opérateur pour permettre une intervention sur le dispositif de déplacement (4), la plateforme additionnelle (A) étant disposée d'un second côté du chemin de circulation en vis-à-vis de la plateforme (5), le second côté étant opposé au premier côté par rapport au chemin de circulation dans une observation verticale.

2. Gare selon la revendication 1 dans laquelle dans la première position, la plateforme additionnelle (A) est disposée, au moins en partie, du premier côté par rapport au chemin de circulation.

3. Gare selon la revendication 2 dans laquelle dans la première position, la plateforme additionnelle (A) est disposée majoritairement du premier côté par rapport au chemin de circulation.

4. Gare selon l'une des revendications 1 et 2 dans laquelle, dans la deuxième position, la plateforme additionnelle (A) est disposée dans un espace destiné à être occupé par la pince (3), la plateforme additionnelle (A) formant un obstacle au passage du au moins un véhicule dans la gare (1).

5. Gare selon l'une quelconque des revendications 1 à 4 comportant, en outre, une paroi de toit (7) et dans laquelle la paroi de toit (7) définit une plateforme supplémentaire (7a) destinée à supporter l'opérateur, la plateforme supplémentaire (7a) étant décalée de la plateforme additionnelle (A) selon une première direction perpendiculaire au chemin de circulation dudit au moins un véhicule, la plateforme supplémentaire (7a) étant disposée à une hauteur inférieure à la hauteur de la plateforme additionnelle et décalée pour disposer la plateforme additionnelle entre une pluralité de roues formant la pluralité d'éléments mobiles et la plateforme supplémentaire (7a) pour que la plateforme additionnelle (A) forme un plan de travail.

6. Gare selon la revendication 5 dans laquelle le dispositif de déplacement (4) comporte au moins une roue (4a) configurée pour déplacer le au moins un véhicule dans la gare (1), et dans laquelle l'altitude de la plateforme additionnelle (A) est inférieure à l'altitude d'un axe de rotation de la au moins une roue (4a).

7. Gare selon l'une quelconque des revendications 1 à 6 dans laquelle la plateforme additionnelle (A) est formée par une première plaque (α) et une deuxième plaque (β), la deuxième plaque (β) étant montée mobile par rapport à la première plaque (α), la deuxième plaque (β) étant montée mobile entre une position de protection et une protection rabattue, dans laquelle dans la position de protection, la deuxième plaque (β) s'étend à partir de la première plaque (α) vers le haut et dans laquelle dans la position rabattue la deuxième plaque (β) est plaquée contre la première plaque (α).

8. Gare selon l'une quelconque des revendications 1 à 6 dans laquelle, dans la première position, la plateforme additionnelle (A) forme le capotage.

9. Gare selon l'une quelconque des revendications précédentes dans laquelle la plateforme additionnelle (A) est montée en rotation entre la première position et la deuxième position.

10. Procédé de maintenance d'une gare d'une installation de transport par câble comportant les étapes suivantes :
- fournir une gare (1) selon l'une quelconque des revendications précédentes ;
- déplacer la plateforme additionnelle (A) de la première position à la deuxième position, la deuxième position supportant un opérateur qui intervient sur le dispositif de déplacement (4), la première position est une position où la plateforme additionnelle est hors de l'espace de passage des véhicules dans la gare (1).

## Patentansprüche

1. Station (1) einer Seilbahnanlage, die mit mindestens einem Fahrzeug ausgestattet ist, wobei der Station (1) umfasst:
- eine Bewegungseinrichtung (4), die dazu konfiguriert ist, das mindestens eine Fahrzeug in der Station (1) zu bewegen, wobei die Bewegungseinrichtung (4) einen Fahrweg des mindestens einen Fahrzeugs in der Station (1) definiert, wobei die Bewegungseinrichtung (4) eine Vielzahl von beweglichen Elementen (4a, 4b) umfasst, die geeignet sind, das mindestens eine Fahrzeug in der Station (1) zu bewegen;
- eine Plattform (5), die auf einer ersten Seite des Fahrwegs angeordnet ist, wobei die Plattform (5) dazu konfiguriert ist, das Umhergehen eines Bedieners neben der Bewegungseinrichtung (4) zuzulassen und einen Eingriff an der Bewegungseinrichtung (4) zu ermöglichen;
- mindestens eine Verkleidung (6), die zwischen einer ersten Position und einer zweiten Position beweglich montiert ist, wobei die mindestens eine Verkleidung (6) in der ersten Position die Bewegungseinrichtung (4) mindestens partiell abdeckt, um den auf der Plattform (5) befindlichen Bediener und die Bewegungseinrichtung (4) zu trennen und den Zugang zu der Bewegungseinrichtung (4) von der Plattform (5) aus zu verhindern, wobei die mindestens eine Verkleidung (6) in der zweiten Position den Zugang zu der Bewegungseinrichtung (4) von der Plattform (5) aus zulässt;
wobei die Station (1) einen Durchgangsraum definiert, der dazu bestimmt ist, eine Klemme (3) des mindestens einen Fahrzeugs durchlaufen zu lassen, wobei die Klemme (3) das mindestens eine Fahrzeug an dem Seil (2) befestigt, wobei die Bewegungseinrichtung (4) zwischen der Plattform (5) und dem Durchgangsraum angeordnet ist;
**wobei die Station dadurch gekennzeichnet ist, dass** die mindestens eine Verkleidung (6) in der zweiten Position eine zusätzliche Plattform (A) bildet, die geeignet ist, den Bediener zu tragen, um einen Eingriff an der Bewegungseinrichtung (4) zu ermöglichen, wobei die zusätzliche Plattform (A) der Plattform (5) gegenüberliegend auf einer zweiten Seite des Fahrwegs angeordnet ist, wobei die zweite Seite relativ zum Fahrweg vertikal gesehen der ersten Seite entgegengesetzt ist.

2. Station nach Anspruch 1, wobei die zusätzliche Plattform (A) in der ersten Position relativ zum Fahrweg mindestens partiell auf der ersten Seite angeordnet ist.

3. Station nach Anspruch 2, wobei die zusätzliche Plattform (A) in der ersten Position relativ zum Fahrweg überwiegend auf der ersten Seite angeordnet ist.

4. Station nach einem der Ansprüche 1 und 2, wobei die zusätzliche Plattform (A) in der zweiten Position in einem Raum angeordnet ist, der dazu bestimmt ist, von der Klemme (3) eingenommen zu werden, wobei die zusätzliche Plattform (A) ein Hindernis für den Durchgang des mindestens einen Fahrzeugs durch die Station (1) bildet.

5. Station nach einem der Ansprüche 1 bis 4, außerdem umfassend eine Dachwandung (7), und wobei die Dachwandung (7) eine Zusatzplattform (7a) zum Tragen des Bedieners definiert, wobei die Zusatzplattform (7a) der zusätzlichen Plattform (A) gegenüber in einer ersten Richtung senkrecht zum Fahrweg des mindestens einen Fahrzeugs versetzt ist, wobei die Zusatzplattform (7a) in einer Höhe angeordnet ist, die kleiner ist als die Höhe der zusätzlichen Plattform, und versetzt ist, um die zusätzliche Plattform zwischen einer Vielzahl von Rädern, die die Vielzahl von beweglichen Elementen bilden, und der Zusatzplattform (7a) anzuordnen, damit die zusätzliche Plattform (A) eine Arbeitsfläche bildet.

6. Station nach Anspruch 5, wobei die Bewegungseinrichtung (4) mindestens ein Rad (4a) umfasst, das dazu konfiguriert ist, das mindestens eine Fahrzeug in der Station (1) zu bewegen, und wobei die Höhe der zusätzlichen Plattform (A) kleiner ist als die Höhe einer Drehachse des mindestens einen Rads (4a).

7. Station nach einem der Ansprüche 1 bis 6, wobei die zusätzliche Plattform (A) durch eine erste Platte (α) und eine zweite Platte (β) gebildet wird, wobei die zweite Platte (β) relativ zur ersten Platte (α) beweglich montiert ist, wobei die zweite Platte (β) zwischen einer Schutzstellung und einer umgeklappten Stellung beweglich montiert ist, wobei sich die zweite Platte (β) in der Schutzstellung von der ersten Platte (α) aus nach oben erstreckt, und wobei die zweite Platte (β) in der umgeklappten Stellung gegen die erste Platte (α) gedrückt wird.

8. Station nach einem der Ansprüche 1 bis 6, wobei die zusätzliche Plattform (A) in der ersten Position die Verkleidung bildet.

9. Station nach einem der vorherigen Ansprüche, wobei die zusätzliche Plattform (A) zwischen der ersten Position und der zweiten Position drehbar montiert ist.

10. Wartungsverfahren einer Station einer Seilbahnanlage, umfassend die folgenden Schritte:
- Bereitstellen einer Station (1) nach einem der vorherigen Ansprüche,
- Bewegen der zusätzlichen Plattform (A) von der ersten Position in die zweite Position, wobei die zweite Position einen Bediener trägt, der an der Bewegungseinrichtung (4) eingreift, wobei die erste Position eine Position ist, in der die zusätzliche Plattform außerhalb des Durchgangsraums der Fahrzeuge in der Station (1) liegt.

## Claims

1. Terminal (1) of an aerial transportation installation provided with at least one vehicle, the terminal (1) comprising:
- a moving device (4) configured to drive the at least one vehicle in the terminal (1), the moving device (4) defining a running path of the at least one vehicle in the terminal (1), the moving device (4) comprising a plurality of moving parts (4a, 4b) able to move the at least one vehicle in the terminal (1);
- a platform (5) arranged on a first side of the running path, the platform (5) being configured to allow an operator to move alongside the moving device (4) and to enable him/her to perform operations on the moving device (4);
- at least one shrouding (6) mounted movable between a first position and a second position, in the first position the at least one shrouding (6) at least partially covering the moving device (4) to separate the operator on the platform (5) and the moving device (4) and prevent access to the moving device (4) from the platform (5), in the second position the at least one shrouding (6) allowing access to the moving device (4) from the platform (5);
the terminal (1) defining a running space designed to let a grip (3) of the at least one vehicle run, the grip (3) fixing the at least one vehicle to the cable (2), the moving device (4) being arranged between the platform (5) and the running space; **terminal characterised in that**, in the second position, the at least one shrouding (6) forms an additional platform (A) able to support the operator to enable him/her to perform an operation on the moving device (4), the additional platform (A) being arranged on a second side of the running path facing the platform (5), the second side being opposite the first side with respect to the running path in a vertical observation.

2. Terminal according to claim 1 wherein, in the first position, the additional platform (A) is at least partially arranged on the first side with respect to the running path.

3. Terminal according to claim 2 wherein, in the first position, the additional platform (A) is arranged mainly on the first side with respect to the running path.

4. Terminal according to one of claims 1 and 2 wherein, in the second position, the additional platform (A) is arranged in a space designed to be occupied by the grip (3), the additional platform (A) forming an obstacle to running of the at least one vehicle in the terminal (1).

5. Terminal according to any one of claims 1 to 4 further comprising a roof panel (7) and wherein the roof panel (7) defines a supplementary platform (7a) designed to support the operator, the supplementary platform (7a) being offset from the additional platform (A) in a first direction perpendicular to the running path of said at least one vehicle, the supplementary platform (7a) being located at a height lower than the height of the additional platform and offset to arrange the additional platform between a plurality of wheels forming the plurality of moving parts and the supplementary platform (7a) so that the additional platform (A) forms a work surface.

6. Terminal according to claim 5 wherein the moving device (4) comprises at least one wheel (4a) configured to move the at least one vehicle in the terminal (1), and wherein the altitude of the additional platform (A) is lower than the altitude of an axis of rotation of the at least one wheel (4a).

7. Terminal according to any one of claims 1 to 6 wherein the additional platform (A) is formed by a first plate (α) and a second plate (β), the second plate (β) being fitted movable with respect to the first plate (α), the second plate (β) being fitted movable between a protection position and a retracted position, wherein in the protection position, the second plate (β) extends upwards from the first plate (α) and wherein in the retracted position the second plate (β) is pressing against the first plate (α).

8. Terminal according to any one of claims 1 to 6 wherein, in the first position, the additional platform (A) forms the shrouding (6).

9. Terminal according to any one of the foregoing claims wherein the additional platform (A) is mounted rotatable between the first position and the second position.

10. Method for performing maintenance of a terminal of an aerial transportation installation comprising the following steps:
- providing a terminal (1) according to any one of the foregoing claims;
- moving the additional platform (A) from the first position to the second position, the second position supporting an operator performing operations on the moving device (4), the first position is a position where the additional platform is outside the running space of the vehicles in the terminal (1).
